# EUROPEAN PATENT APPLICATION

(11) **EP 4 811 112 A1**
(43) Date of publication of application: **23.09.2026**
(21) Application number: 25305375.5
(22) Date of filing: 19.03.2025
(51) Int. Cl.: G06F 8/10, G06N 20/00, G06Q 10/067

(54) **METHOD FOR DESIGNING AN INFORMATION TECHNOLOGY SOLUTION**

(71) Applicant: ATOS France, 95870 Bezons (FR)
(72) Inventor: TANGER, Erwin, 33129 Delbrück (DE)
(74) Representative: Novagraaf Technologies

(57) **Abstract**

The invention relates to a method for designing an IT solution, the designed IT solution being specific to a business actor, the business actor belonging to a business domain, the method (1) comprising:
- Obtaining (10) a set of public business domain documents comprising a business domain specific knowledge,
- Tuning (40) a business domain foundation model in order to incorporate the business domain specific knowledge in the business domain foundation model,
- Obtaining (70) a set of protected business actor documents comprising business actor specific knowledge and business actor specific requirements, and
- Tuning (80) a business actor solution model in order to incorporate the business actor specific knowledge and business actor specific requirements into the business actor solution model, the business actor solution model being based on the business domain foundation model..

## Description

### TECHNICAL FIELD

The technical field of the invention is the design of an information technology (IT) solution.

The present invention regards a computer implemented method for designing an IT solution.

### STATE OF THE ART

IT solutions are used in various domains such as manufacturing operations management, healthcare, traffic management (rail etc.), energy and utilities, defence and public security, public administration.

An IT solution is a set of software and hardware components that are bundled together in an infrastructure. An IT solution is designed to help businesses manage complex technical operations. The key technological elements of an IT solution comprise:
- Hardware components such as physical devices like servers, computers, and networking equipment,
- Software components such as applications, programs, and systems tools e.g., ERP (for "enterprise resource planning") or CRM (for "Customer Relationship Management") tools, and
- Infrastructure such as network setups or cloud computing platforms.

Designing such IT solutions is a complex and tedious task. Some generic designs and principles are known and often used in various business domains. But a generic designed IT solution is not optimal for a business actor. For example, each business actor, such as an enterprise or an organization, has specific requirements and specific knowledge, frequently named "knowhow". An optimal IT solution for one business actor is therefore not the optimal IT solution for another business actor, even if both business actors are in same business domain. In other words, an IT solution needs to be adapted, for example to meet the business actor specific requirements.

To be optimal, a design of an IT solution needs to be specific to one business actor. Now, an IT solution is generally designed by one or more IT solution architects. The design of an IT solution for one business actor needs the IT solution architects, which for example work for a system integrator company, to have access to the business actor specific requirements and specific knowledge. Such information may be confidential, and the business actor may not want to share it to the IT solution architect. Thus, the design of a specific IT solution to one business actor may be impossible if the design process is not able to support the required confidentiality.

Within this context, there is still a need to improve the process of designing an IT solution.

### SUMMARY OF THE INVENTION

There is therefore a need to provide a method for designing an IT solution specific to each business actor. The method is based on an artificial intelligence model which is trained in two phases. A first phase of tuning is performed with public business domain documents and a second phase of tuning is performed with protected business actor documents. The IT solution is therefore specifically designed for each business actor. Furthermore, the confidentiality of the business actor documents is improved as the business actor documents are used only in the second phase of tuning.

According to a first aspect of the invention, this need is satisfied by providing a computer implemented method for designing an IT solution, the designed IT solution being specific to a business actor, the business actor belonging to a business domain, the method comprising:
- Obtaining a set of public business domain documents comprising a business domain specific knowledge,
- Tuning a business domain foundation model, the tuning consisting of using scripts and a prompt flow in order to incorporate the business domain specific knowledge in the business domain foundation model,
- Generating, by prompt engineering the trained business domain foundation model, a reference business domain architecture of the IT solution, the reference business domain architecture being an abstract architecture of the design of the IT solution specific to the business actor,
- Obtaining a set of protected business actor documents comprising business actor specific knowledge and business actor specific requirements,
- Tuning a business actor solution model, the tuning consisting of using scripts and a prompt flow in order to incorporate the business actor specific knowledge and business actor specific requirements into the business actor solution model, the business actor solution model being based on the business domain foundation model,
- Generating, by prompt engineering the trained business actor solution model, a design of the IT solution, the design of the IT solution being based on the business actor specific knowledge and business actor specific requirements and a specification of the reference domain architecture of the IT solution.

The method according to the first aspect of the invention may also have one or more of the following characteristics, considered individually or according to any technically possible combinations thereof:
- The method further comprises implementing the IT solution based on the generated design of the IT solution;
- The implementing comprising:
   - Generating, by prompt engineering the trained business actor solution model, a set of software artifacts comprising scripts and/or software code to create executable applications or configuration files;
- The foundation model is a large language model and the method comprises, after the obtaining the set of public business domain documents and before the tuning the business domain foundation model:
   - Selecting the large language model, the selected large language model being open source and configured to analyse and generate diagrams and having incorporated knowledge on IT solution architectures and the business domain;
- The method comprises, after the obtaining the set of public business domain documents and before the tuning the business domain foundation model:
   - Augmenting the capability of the large language model by applying a retrieval augmented generation;
- The method comprises, after the obtaining the set of protected business actor documents and before the tuning the business actor solution model:
   - Augmenting the capability of the large language model by applying a retrieval augmented generation;
- The tuning the business domain foundation model is an advanced prompting and prompt engineering based model tuning comprising:
   - Checking, by a reference architecture author, the quality of answers given by the business domain foundation model;
- The tuning the actor domain foundation model is an advanced prompting and prompt engineering based model tuning comprising:
   - Checking, by a solution design author, the quality of answers given by business actor solution model;
- The method comprises, after the generating the reference architecture of the IT solution and before the obtaining the set of protected business actor documents:
   - generating an instance of the business domain foundation model, and
- the business actor solution model is based on the instance of the business domain of foundation model;
- the obtaining the set of public business domain documents, the tuning the business domain foundation model and the generating a reference business domain architecture are implemented every three months.

According to a second aspect of the invention, this need is satisfied by providing a system for designing an IT solution adapted to implement the method of the invention and comprising:
- A system integrator system located in a system integrator IT infrastructure and configured to:
   - Obtain the set of public business domain documents comprising the business domain specific knowledge,
   - Tune the business domain foundation model, the tuning consisting of using scripts and the prompt flow in order to incorporate the business domain specific knowledge by the business domain foundation model, and
   - Generate, by prompt engineering with the trained business domain foundation model, the reference business domain architecture of the IT solution, the reference business domain architecture being the abstract architecture of the design of the IT solution specific to the business actor,
- A business actor system located in a business actor IT infrastructure and configured to:
   - Obtain the set of protected business actor documents comprising business actor specific knowledge and business actor specific requirements,
   - Tune the business actor solution model, the tuning consisting of using scripts and the prompt flow in order to incorporate the business actor specific knowledge and business actor specific requirements into the business actor solution model, the business actor solution model being based on the business domain foundation model,
   - Generate, by prompt engineering the trained business actor solution model, the design of the IT solution, the design of the IT solution being based on the business actor specific knowledge and business actor specific requirements and the specification of the reference domain architecture of the IT solution.

The system according to the second aspect of the invention may also have one or more of the following characteristics, considered individually or according to any technically possible combinations thereof:
- the system integrator IT infrastructure does not have access to the business actor IT infrastructure;
- the system integrator system comprises:
   - An external documentation crawler configured to obtain the set of public business domain documents comprising the business domain specific knowledge,
   - A system integrator enterprise content system configured to store the business domain specific knowledge, and
   - A system integrator artificial intelligence framework configured to:
      - Tune the business domain foundation model, the tuning consisting of using scripts and the prompt flow in order to incorporate the business domain specific knowledge by the business domain foundation model, and
      - Generate, by prompt engineering with the trained business domain foundation model, the reference business domain architecture of the IT solution, the reference business domain architecture being the abstract architecture of the design of the IT solution specific to the business actor;
- the business actor system comprises:
   - A business actor enterprise content system configured to store the business actor specific knowledge and specific requirements,
   - A business actor artificial intelligence framework configured to:
      - Tune the business domain foundation model, the tuning consisting of using scripts and the prompt flow in order to incorporate the business domain specific knowledge by the business domain foundation model, and
      - Generate, by prompt engineering with the trained business domain foundation model, the reference business domain architecture of the **IT** solution, the reference business domain architecture being the abstract architecture of the design of the IT solution specific to the business actor.

It is further provided a computer program comprising instructions which, when the computer program is carried out on a computer, cause the computer to carry out the method of the invention.

It is further provided a computer readable data storage medium having recorded thereon the computer program of the invention.

### BRIEF DESCRIPTION OF THE FIGURES

The figures are presented for information purposes only and in no way limit the invention.
Figure 1 is a synoptic scheme illustrating the steps of an example of a method according to the invention.
Figure 2 shows a schematic representation of an example of a system adapted to implement the method according to the invention.

For greater clarity, identical or similar elements are marked by identical reference signs in all of the figures.

### DETAILED DESCRIPTION

Some embodiments of devices and methods in accordance with embodiments of the present invention are now described, by way of example only, and with reference to the accompanying drawings. The description is to be regarded as illustrative in nature and not as restrictive.

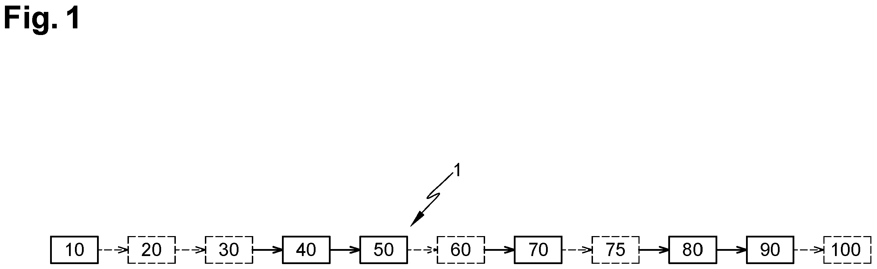

Figure 1 is a synoptic scheme illustrating the steps of an example of the method 1 according to the invention. The mandatory steps of the example of the method 1 are indicated by a rectangle with solid lines and the optional steps are indicated by a rectangle with dashed lines.

It is provided a method 1 for designing an IT solution. A designed IT Solution is defined as a set of textual descriptions of the IT solution elements, which include active building blocks and passive data objects, and diagrams showing the relationships between solution elements. IT solution designs may be captured as Microsoft Office documents, like Microsoft Word or Microsoft Powerpoint, or are captured in specific IT tools like Sparx Enterprise Architect which already support some design principles and modelling techniques. The semantics of textual descriptions as well as diagrams may follow architecture views and concepts defined in TOGAF^{®} Standard, for "The Open Group Architecture Framework". Notations, especially diagrams, may be based on an open and independent enterprise architecture modeling language such as Archimate, BPMN (for "Business Process Model and Notation") and UML (for "unified modeling language"). The designed IT solution may be of various sizes and having various architectures, for example including various architecture views or architecture viewpoints as recommended in ISO/IEC/IEEE 42010, with ISO standing for "International Organization for Standardization", with IEC standing for "International Electrotechnical Commission" and with IEEE standing for "Institute of Electrical and Electronics Engineers". The designed IT solution is specifically designed for a business actor. The designed IT solution may therefore be unique for each business actor. The designed IT solution may support a business actor in executing its business functions. The designed IT solution matches the business actor specific requirements. The designed IT solution depends also on the business actor specific knowledge. Said otherwise, the business actor specific knowledge may be used to guide the design of the IT solution. For example, the business actor specific knowledge may teach that some data are duplicated in two servers located in two different locations distanced by at least a predefined distance. Such features will be implemented in the designed IT solution. A business actor belongs to a business domain. A delimitation of a business domain may be based on the system integrator organisation and/or based on analysis of the business market. For one business domain, a list of key technology/business words may be provided by experts in the domain. A business domain may be one amongst:
- Manufacturing,
- Finance,
- public administration,
- defence.

Each business domain may be divided into product specific subdomains. For example, a business domain such as manufacturing may be divided into product specific subdomains such like automotive, discrete manufacturing, process industries, healthcare product or medical production. As an example, a business actor could be a car manufacturer within a business domain such as automotive. The business actor could also be a specific team of the business actor, for example the sales team which needs a sales IT system. This sales IT system requires a solution design which in turn has to be implemented as an IT solution, i.e. has to be translated into a running software.

In a first example, a business domain may be automotive, more specifically car manufacturing. A first business actor may be a sales department of an electric car manufacturer, needing an IT System to support customers to configure their electric car using an online service. A second business actor may be a sales department of a car manufacturer, needing an IT System to support sales staff in a car dealership. The business actors specific knowledge and specific requirements differ between the different business actors. For example, for the second business actor, the IT System must have an interface to the HR system and also to the Customer Relationship Management system because they contain the information whether or not the sales employee shall get an incentive for selling specific car configurations. Conversely, for the first business actor, there is no need for such features as the sales staff is not involved in selling the cars.

In a second example, a business domain may be public administration, more specifically immigration services. A first business actor may be a first immigration service of a first country, needing an IT system to register immigrants. A second business actor may be a second immigration service of a second country, needing an IT system to register refugees and immigrants. In this example, business actors specific knowledge and specific requirements may vary depending of the legal regulations in the various countries. For example, the first business actor system might have to support not only the actual residence of an immigrant but keep aligned with local police departments and other security authorities. In the second country, an automatic bi-directional information exchange between the second immigration service and police might be forbidden due to legal constraints.

In a third example, a business domain may be Defence, more specifically situation awareness. A first business actor may be a first army, needing an IT system to monitor situation around their aircraft carriers. A second business actor may be a second army, needing an IT System to monitor their own and opponents drones at the border. The first army's specific knowledge and specific requirements may comprise that the full processing capability must be located in the aircraft carrier and the availability concept, especially the number of servers must support 24/7 availability. The second army's specific knowledge and specific requirements may comprise that other options of distribution of processing capability like cloud based processing.

In a fourth example, a business domain may be finance, more specifically risk management. A first business actor may be a first bank, needing an IT system to calculate the risk of offering credits to private customers. A second business actor may be a first investment management and wealth management division of a bank, needing an IT system to calculate the risk of a specific merge & acquisition transaction. The specific knowledge and specific requirements for the first business actor may comprise that the IT system must have statistical information on a huge set of individuals within the same region, with comparable level of education and comparable income The specific knowledge and specific requirements for the second business actor may comprise the need of very precise information on a small set of companies and on a specific market they are active in. Hence, the IT systems will need different interfaces to publicly available data sources and will have to apply different algorithms.

A step 10 of the method 1 comprises obtaining a set of public business domain documents comprising a business domain specific knowledge. The term "obtaining" may be defined in the present application as "receiving by the system" or "providing" or "generating by the system". The obtaining 10 may comprise a crawling of the internet, i.e. a configured automated internet search for a business domain related documentation and storing search results. The terms "public business domain documents" mean here documents that are not considered confidential and/or free of property rights and/or are not explicitly excluded for automatic processing by Al by owners. The obtaining 10 of the set of public business domain documents may therefore comprise, for every document, a check for permission for automated processing via artificial intelligence. Examples of business domain specific knowledge may be standards, data models, reference architectures, best practices. The set of public business domain documents may include at least one amongst:
- vendor documentation,
- reference architectures,
- data models,
- best practices,
- user interface concepts,
- standards such like ISA95 (for "International Society of Automation"), ISO (for "International Organization for Standardization") and IEC (for "International Electrotechnical Commission") standards or OMG^{®} (for "Object Management Group") standards.

For example, business domain specific knowledge may comprise:
- Generic and business domain specific Ref Architectures such as the ones available on internet, for example available her: https://aws.amazon.com/de/architecture or https://learn.microsoft.com/en-us/azure/architecture/browse/,
   - For a business domain like defence: North Atlantic Treaty organization Architecture framework for example the framework described here https://www.nato.int/cps/en/natohq/topics_157575.htm,
   - For a business domain like smart manufacturing, the Manufacturing Enterprise Solutions Association model for example the model described here https://mesa.org/topics-resources/mesa-model/,
   - For a business domain like supply chain, a Supply Chain Operations Reference model for example the model described here https://www.ascm.org/globalassets/ascm_website_assets/docs/ intro-and-front-matter-scor-digital-standard2.pdf,
   - Data models and modelling best practices from Open Platform Communications, noted OPC, foundation such like OPC 11030-1: UA Modelling Best Practices available here https://reference.opcfoundation.org/Model-Best/v103/docs/.

The step 10 may also comprise obtaining an additional set of business domain documents previously collected and/or generated by the system integrator company. The additional set of business domain documents also comprises the business domain specific knowledge. The additional set of business domain documents may be based on the previous obtained set of public business domain documents. For example, the additional set of business domain documents may be generated and updated at a predetermined interval with the set of public business domain documents obtained, for example every three months. The additional set of business domain documents may therefore be integrated into the set of public business domain documents to be used in the other steps of method 1.

An optional step 20 of the method 1 comprises a selection of a large language model. The selection of the large language model may be performed amongst foundation models. The selected large language model may be used to generate a business domain foundation model. A business domain foundation model may be defined as a large language model which has been created as copy of a foundation model and has been fed with domain specific documentation so that it represents a very specialized model for the given business domain. The selection of the large language model may be based on various criteria. The selected large language model may be the best fitting foundation model for the given business domain. For example, the selected large language model may be open source. The selected large language model may also be configured to analyse diagrams, as an input, and to generate diagrams as an output. The selected large language model may also be configured to analyse and generate other types of inputs, such as text, images or videos. The selected large language model may have been trained to incorporate knowledge on IT solution architectures and the given business domain. Incorporating refers, in the present application, to the process of tuning the model to be aware and able to use some knowledge to generate an output. Various large language models available may be used as the foundation models. For example, the selected large language model may be one amongst:
- Claude from Antropic,
- ChatGPT from OpenAl,
- LaMDA from Google.

The foundation models may be stored in a foundation model repository. Various foundation model repositories are already available. For example, Hugging Face on Amazon Web Services or Google Cloud Platform Model Garden may be used as foundation model repositories.

An optional step 30 of the method 1 comprises augmenting the capability of the large language model by applying a retrieval augmented generation. The retrieval augmented generation is the process of querying external data, i.e. external to the set of public business domain documents, in order to optimize the output of the business domain foundation model.

A step 40 of the method 1 comprises tuning a business domain foundation model. The tuning 40 consists of incorporating the business domain specific knowledge into the business domain foundation model. The tuning 40 is implemented by using scripts and a prompt flow. In an example, the tuning 40 may comprise an advanced prompting and prompt engineering based model tuning. In this example, a reference architecture author may check the quality of answers given by the business domain foundation model. The reference architecture author may be an employee of the system integrator company. The reference architecture author doesn't need to access any business actor specific knowledge or business actor specific requirements.

A step 50 of the method 1 comprises generating a reference business domain architecture of the IT solution. The reference business domain architecture is an abstract architecture of the design of the IT solution specific to the business actor. An abstract architecture of the design of the IT solution refers to a high-level representation of how an IT solution is structured and operates, without delving into specific implementation details. An abstract architecture provides a conceptual framework to understand, design, and communicate the components and their interactions within the solution. The reference business domain architecture may be used for various business actors of the same business domain. The generating of the reference business domain architecture is obtained by prompt engineering the trained business domain foundation model. An example of a prompt used during the step 50 may comprise at least one instruction amongst:
- Requiring a set of standards being relevant for the given business domain,
- Requiring a list of known business processes which are part of the TOGAF Business Architecture for the given business domain,
- Requiring a list of process steps, and a detailed description of the process steps, which are part of the known business processes,
- Requiring a set of building blocks, and a detailed description of the building blocks, being required to support the known business processes, each building block being defined as a set of logical functionalities implemented by IT, which can comprise software but also hardware components,
- Requiring a list of applications which can implement the building blocks,
- Requiring detailed technical specifications of potential implementations of the building blocks,
- Requiring a set of data objects, and a document for each data object according to a documentation template, defined in the standards or processed in the business processes or applications,
- Requiring a visualization of the data objects and the relationships amongst them in a diagram which shall serve as a data model,
- Requiring a visualization of the data flows between applications by indicating which data object is exchanged between which applications,
- Requiring a User Interface Concept indicating how human beings (users) can interact with the building blocks of the reference architecture,
- Requiring a reference architecture comprising the previous descriptions and visualizations.

A step 60 of the method 1 comprises generating an instance of the business domain foundation model. The instance may be generated by duplicating the business domain foundation model. Instantiating the business domain foundation model allows to modify the instance of the business domain foundation model, for example by specializing the instance to a business subdomain, without modifying the business domain foundation model. When an instance of the business domain foundation model is generated, the business actor solution model may be based on the instance of the business domain of foundation model.

The steps 10, 20, 30, 40, 50 and 60 are part of a first phase of the method 1. The first phase, or at least some steps of the first phase, may be performed at a predetermined interval, for example every three months. The first phase may also be performed whenever there is an indication that there are new insights available, for example in the internet, related to the given business domain.

A step 70 of the method 1 comprises obtaining a set of protected business actor documents. The terms "protected documents" mean here documents that are considered confidential, for example documents with a credential protected access. The business actor documents comprise business actor specific knowledge. Examples of business actor specific knowledge may be standards, data models, reference architectures, best practices. The business actor documents also comprise business actor specific requirements.

An optional step 75 of the method 1 comprises augmenting the capability of the large language model by applying a retrieval augmented generation. This step may be implemented, after the obtaining 70 and before the tuning 80, in a similar way than the optional step 30.

A step 80 of the method 1 comprises tuning a business actor solution model. The tuning 80 consists of incorporating the business actor specific knowledge and business actor specific requirements into the business actor solution model. The business actor solution model is based on the business domain foundation model. The business domain foundation model may be used as an initial model to be trained during step 80. The tuning 80 is implemented by using scripts and a prompt flow. In an example, the tuning 80 may comprise an advanced prompting and prompt engineering based model tuning. In this example, a solution design author may check the quality of answers given by the business actor solution model. The solution design author may be an employee of the system integrator company. The solution design author may have been given specific credentials by the business actor company to access business actor specific knowledge and business actor specific requirements.

A step 90 of the method 1 comprises generating a design of the IT solution. The generating 90 is performed by prompt engineering the trained business actor solution model. The generated design of the IT solution is based on the business actor specific knowledge and business actor specific requirements. For example, the generated design of the IT solution matches the business actor specific requirements. The generated design of the IT solution is a specification of the reference domain architecture of the IT solution. The specification may comprise delving into specific implementation details, which were missing in the reference domain architecture of the **IT** solution. An example of a prompt used during the step 90 may comprise at least one instruction amongst:
- Requiring an implementation matrix which maps the business actor specific requirements to the building blocks of the reference architecture provided (the reference architecture provided may be for example the reference architecture obtained with the prompt used during the step 50),
- Requiring a detailed technical specifications of potential implementation components of the building blocks mentioned in the implementation matrix wherein addons may be added for necessary enhancements,
- Requiring a set of data objects, to be exchanged between building blocks, implementation components and addons to meet the business actor specific requirements,
- Requiring a visualization of the data flows between building blocks, implementation components and addons to meet the business actor specific requirements,
- Requiring the fit to purpose User Interface (UI) concept and also UI framework to be used for implementation,
- Requiring a User Interface Structure indicating how human beings (users) can interact with the building blocks of the reference architecture
- requiring a design of the IT solution design comprising the previous descriptions and visualizations and including the implementation matrix,

A step 100 of the method 1 comprises implementing an IT solution based the generated design of the IT solution. In other words, the implemented IT solution respects the design of the IT solution. The implementation of the IT solution comprises setting up hardware components of the IT solution but also implementing software components of the IT solution. The implementation of the software components of the IT solution comprises generating a set of software artifacts. The set of software artifacts comprises scripts and/or software code to create executable applications or configuration files. The implementation of the software components is performed by following a solution design prompt logic, which consists of prompt engineering the trained business actor solution model. An example of a prompt used during the step 100 may comprise at least one instruction amongst:
- requiring a suggestion of a programming language for the implementation components and addons (obtained for example with the prompt used during step 90) to meet the business actor specific requirements,
- requiring a list of scripts and programs to implement the implementation components and addons to meet the business actor specific requirements.

The steps 70, 80, 90 and 100 are part of a second phase of the method 1. These steps are specific to a business actor.

The method 1 is "computer implemented". "Computer-implemented" means that the steps, or at least some of the steps, are performed by at least one computer or processor or other similar system. Thus, steps are performed by the computer, possibly fully automatically, or, semi-automatically. In examples, the triggering of at least some of the steps of these methods may be performed by user-computer interaction. The level of user-computer interaction required may depend on the level of automation intended and balanced against the need to implement the user's wishes. In examples, this level may be user defined and/or may be predefined.

A typical example of a computer implementation of a method is to execute the method with a system adapted for the purpose. A system may be configured to implement all the steps of the method and/or its various embodiments according to the invention. To this end, the system comprises a memory and a computing unit, the memory being configured to store instructions which, when executed by the computing unit, cause the computing unit to implement the steps of the method according to the invention and/or the different embodiments of the method according to the invention. The system further comprises at least one network interface for communicating with remote entities, i.e. for sending and receiving data to said entities, via at least one network. The entities may be servers or computers storing data. The data may be stored by the same server or by different servers/databases.

The computer program may comprise instructions executable by a computer, the instructions comprising means for causing the above system to perform the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the methods by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods.

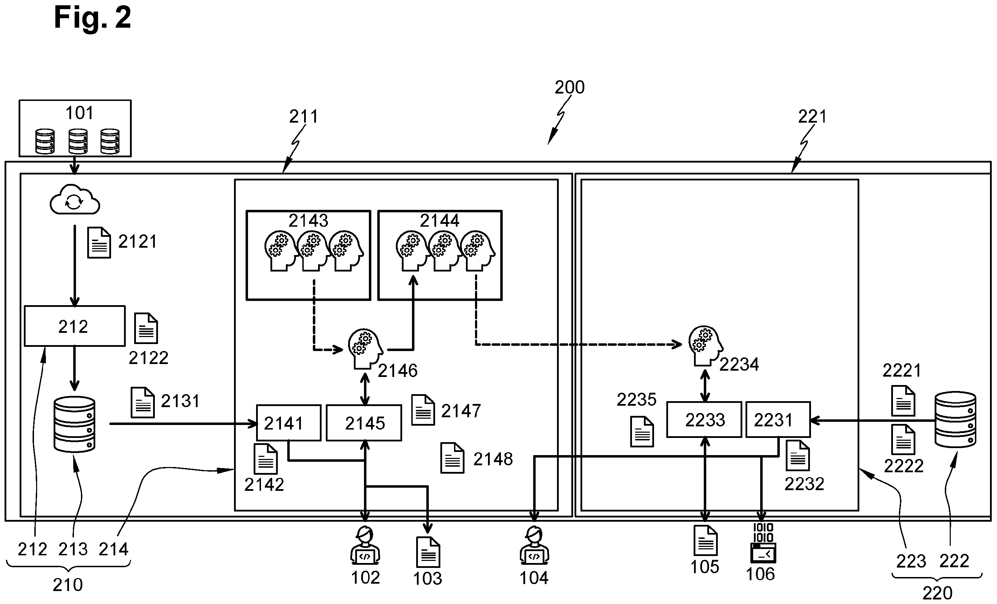

Figure 2 shows a schematic representation of an example of a system adapted to implement the method 1.

The system 200 for designing an IT solution comprises two systems located in two different IT infrastructures. An IT infrastructure refers to the foundational components that support an organization's IT services and operations. It may include:
- Hardware such as servers, computers, storage devices, and networking equipment,
- Software such as operating systems, applications, and databases,
- Network components such as routers, switches, and firewalls,
- Facilities such as data centers and server rooms.

The system 200 comprises a system integrator system 210 located in a system integrator IT infrastructure 211. The system integrator system 210 and the system integrator IT infrastructure 211 are typically owned by the system integrator company. The system 200 comprises a business actor system 220 located in a business actor IT infrastructure 221. The business actor system 220 and the business actor IT infrastructure 221 are typically owned by the business actor company. To ensure the confidentiality of the business actor documents, the system integrator IT infrastructure 211 does not have access to the business actor IT infrastructure 221. For example, the business actor IT infrastructure 221 may have access to the system integrator IT infrastructure 211, at least to some elements of the system integrator IT infrastructure 211 but the system integrator IT infrastructure 211 doesn't have to the business actor IT infrastructure 221. In another example, the system integrator IT infrastructure 211 and the business actor IT infrastructure 221 may be independent IT infrastructures. In this example, the two IT infrastructures 211 and 221, and the two systems 210 and 220, don't share any data and can't communicate together.

The system integrator system 210 is configured to implement the first phase of the method 1. The system integrator system 210 comprises an external documentation crawler 212. The external documentation crawler 212 searches the internet for public business domain documents 101 relevant for the given business domain. The public business domain documents 101 are not part of the system 200. The external documentation crawler 212 may use specific search engine application programming interfaces (noted API), for example provided by the company brightdata^{®}, as well as a configured list of password protected uniform resource locators. The external documentation crawler 212 may store its search result in a public domain documentation 2121 comprising the business domain specific knowledge, in the system integrator enterprise content system 213. The system integrator enterprise content system 213 may also store the additional set of business domain documents.

A crawler configuration file 2122 specifies how and where the external documentation crawler 212 shall search the internet. It provides some key terms and phrases to be searched for as well as known password protected URL. The crawler configuration file 2122 defines the external world to be seen as relevant for the given business domain. It could be implemented as XML format or JSON.

The system integrator system 210 comprises a system integrator artificial intelligence framework 214. An artificial intelligence framework, such as the system integrator artificial intelligence framework 214 or the business actor artificial intelligence framework 223, is a framework that encompasses the architecture, tools, libraries, best practices, and processes used to develop artificial intelligence or even more specific generative artificial intelligence models. Examples of artificial intelligence framework are Google Vertex artificial intelligence, Amazon Machine Learning components or Microsoft Azure Al services.

The system integrator artificial intelligence framework 214 have access to the system integrator enterprise content system 213, for example to obtain the full domain documentation 2131, which comprises the public domain documentation 2121 and optionally the additional set of business domain documents.

The system integrator artificial intelligence framework 214 may comprise a system integrator importer 2141. The system integrator importer 2141 fetches the full domain documentation 2131 according to its importer configuration file 2142. An importer may be considered as working like a crawler with the main difference that the crawler is addressing the internet whereas the importer is addressing the limited area of internal data sources, i.e. the intranet. The importer configuration file 2142 specifies how and where the importer shall fetch documentation. The importer configuration file 2142 may be defined and formatted in the same way than the crawler configuration file 2122. The importer configuration file 2142 provides some key terms and phrases to be searched for, as well as known password protected URL. The importer configuration file 2142 defines the internal sources to be seen as relevant for the given business domain. The importer configuration file 2142 could be implemented as XML format or JSON.

The system integrator artificial intelligence framework 214 may comprise a foundation model repository 2143 and a business domain foundation model repository 2144. The foundation model repository 2143 stores a set of foundation models.

The business domain foundation model repository 2144 stores a set of business domain foundation models. The business domain foundation model repository 2144 stores therefore a set of business domain foundation models which have been validated and proved to be useful for the given business domain.

The system integrator artificial intelligence framework 214 may comprise a system integrator model editor 2145. The system integrator model editor 2145 provides various functionalities such as:
- access to the foundation model repository 2143 to select the best fitting foundation model,
- Instantiate the selected foundation model as a best fitting business domain foundation model 2146 to be processed further,
- Import well defined documents to be fed into the best fitting business domain foundation model 2146 as batch,
- Flow based prompting which passes a sequence of prompts via an API to the best fitting business domain foundation model 2146 and changes the next prompt based on the response received from the API calls. The system integrator model editor 2145 may also comprise an internal scripting engine to allow an exaction of scripts in combination with flow-based prompting. The overall logic of prompting in this step may be defined by a reference architecture prompt 2147. The flow based prompting may comprise a presentation of a documentation template 2148 to the business domain foundation model 2146. The documentation template 2148 specifies the required output format for parts of the design of the IT solution design,
- Save the best fitting business domain foundation model 2146 to the business domain foundation model repository 2144,
- Generate a reference business domain architecture 103,
- A user interface to let the reference architecture author 102 control the other functionalities.

The system integrator artificial intelligence framework 214, especially the system integrator importer 2141 and the system integrator model editor 2145, may be configured to implement a retrieval-augmented generation. An example of a system integrator model editor 2145 may be based on Amazon Web Services Bedrock as it supports prompt flows and selection of foundation models as well as customization, integration, security and governance.

The business actor system 220 comprises a business actor enterprise content system 222. The business actor enterprise content system 222 is configured to store the business actor specific knowledge 2221 and business actor specific requirements 2222. The business actor enterprise content system 222 may be a documentation management system like Microsoft Sharepoint.

The business actor system 220 comprises a business actor artificial intelligence framework 223 which may be similar to the system integrator artificial intelligence framework 214. The business actor system 220 comprises a business actor importer 2231. The business actor importer 2231 fetches the business actor specific knowledge 2221 and business actor specific requirements 2222 according to its importer configuration file 2232.

The business actor artificial intelligence framework 223 may comprise a business actor model editor 2233. The business actor model editor 2233 provides various functionalities such as:
- Obtain a business domain foundation model, for example by accessing business domain foundation model repository and select one of the business domain foundation model,
- Instantiate the business domain foundation model as business actor foundation model 2234 to be processed further,
- Importing of actor specific documents to be fed into the business actor foundation model 2234 as batch, especially the business actor specific requirements 2221 and business actor specific knowledge 2222,
- Flow based prompting which passes a sequence of prompts via an API to the business actor foundation model 2234 and changes the next prompt based on the response received from the API calls. The business actor model editor 2233 may also comprise an internal scripting engine to allow an execution of scripts in combination with flow-based prompting. The overall logic of prompting in this step may be defined by a design prompt 2235,
- Create the design of the IT solution 105 by applying a solution design prompt logic,
- Implementing software components 106 by applying the solution design prompt logic,
- A user interface to let the solution design author 104 control the other functionalities.

The business actor artificial intelligence framework 223, especially the business actor importer 2231 and the business actor model editor 2233, may be configured to implement a retrieval-augmented generation.

## Claims

1. A computer implemented method (1) for designing an IT solution, the designed IT solution being specific to a business actor, the business actor belonging to a business domain, the method (1) comprising:
- Obtaining (10) a set of public business domain documents comprising a business domain specific knowledge,
- Tuning (40) a business domain foundation model, the tuning consisting of using scripts and a prompt flow in order to incorporate the business domain specific knowledge in the business domain foundation model,
- Generating (50), by prompt engineering the trained business domain foundation model, a reference business domain architecture of the IT solution, the reference business domain architecture being an abstract architecture of the design of the IT solution specific to the business actor,
- Obtaining (70) a set of protected business actor documents comprising business actor specific knowledge and business actor specific requirements,
- Tuning (80) a business actor solution model, the tuning consisting of using scripts and a prompt flow in order to incorporate the business actor specific knowledge and business actor specific requirements into the business actor solution model, the business actor solution model being based on the business domain foundation model,
- Generating (90), by prompt engineering the trained business actor solution model, a design of the IT solution, the design of the IT solution being based on the business actor specific knowledge and business actor specific requirements and a specification of the reference domain architecture of the IT solution.

2. A computer implemented method (1) of claim 1 further comprising:
- implementing (100) the IT solution based on the generated (90) design of the IT solution.

3. A computer implemented method (1) of claim 2 wherein the implementing (100) comprising:
- Generating, by prompt engineering the trained business actor solution model, a set of software artifacts comprising scripts and/or software code to create executable applications or configuration files.

4. A computer implemented method (1) of any of the precedent claims wherein the foundation model is a large language model and the method (1) comprising, after the obtaining (10) the set of public business domain documents and before the tuning (40) the business domain foundation model:
- Selecting (20) the large language model, the selected large language model being open source and configured to analyse and generate diagrams and having incorporated knowledge on IT solution architectures and the business domain.

5. A computer implemented method (1) of the precedent claim comprising, after the obtaining (10) the set of public business domain documents and before the tuning (40) the business domain foundation model:
- Augmenting the capability of the large language model by applying a retrieval augmented generation.

6. A computer implemented method (1) of any of the precedent claims wherein the tuning (40) the business domain foundation model is an advanced prompting and prompt engineering based model tuning comprising:
- Checking, by a reference architecture author, the quality of answers given by the business domain foundation model.

7. A computer implemented method (1) of any of the precedent claims wherein the tuning (80) the actor domain foundation model is an advanced prompting and prompt engineering based model tuning comprising:
- Checking, by a solution design author, the quality of answers given by business actor solution model.

8. A computer implemented method (1) of any of the precedent claims comprising, after the generating (50) the reference architecture of the **IT** solution and before the obtaining (70) the set of protected business actor documents:
- generating (60) an instance of the business domain foundation model, and
wherein the business actor solution model is based on the instance of the business domain of foundation model.

9. A computer implemented method of any of the precedent claims wherein the obtaining (10) the set of public business domain documents, the tuning (40) the business domain foundation model and the generating (50) a reference business domain architecture are implemented every three months.

10. A system (200) for designing an IT solution adapted to implement the method (1) of any of the precedent claims and comprising:
- A system integrator system (210) located in a system integrator IT infrastructure (211) and configured to:
o Obtain (10) the set of public business domain documents comprising the business domain specific knowledge,
o Tune (40) the business domain foundation model, the tuning consisting of using scripts and the prompt flow in order to incorporate the business domain specific knowledge by the business domain foundation model, and
o Generate (50), by prompt engineering with the trained business domain foundation model, the reference business domain architecture of the IT solution, the reference business domain architecture being the abstract architecture of the design of the IT solution specific to the business actor,
- A business actor system (220) located in a business actor IT infrastructure (221) and configured to:
o Obtain (70) the set of protected business actor documents comprising business actor specific knowledge and business actor specific requirements,
o Tune (80) the business actor solution model, the tuning consisting of using scripts and the prompt flow in order to incorporate the business actor specific knowledge and business actor specific requirements into the business actor solution model, the business actor solution model being based on the business domain foundation model, and
o Generate (90), by prompt engineering the trained business actor solution model, the design of the IT solution, the design of the IT solution being based on the business actor specific knowledge and business actor specific requirements and the specification of the reference domain architecture of the IT solution.

11. A system (200) of the precedent claim wherein the system integrator IT infrastructure (211) does not have access to the business actor IT infrastructure (221).

12. A system (200) of the precedent claim wherein the system integrator system (210) comprises:
- An external documentation crawler (212) configured to obtain (10) the set of public business domain documents comprising the business domain specific knowledge,
- A system integrator enterprise content system (213) configured to store the business domain specific knowledge, and
- A system integrator artificial intelligence framework (214) configured to:
∘ Tune (40) the business domain foundation model, the tuning consisting of using scripts and the prompt flow in order to incorporate the business domain specific knowledge by the business domain foundation model, and
o Generate (50), by prompt engineering with the trained business domain foundation model, the reference business domain architecture of the IT solution, the reference business domain architecture being the abstract architecture of the design of the IT solution specific to the business actor.

13. A system (200) of the precedent claim wherein the business actor system (220) comprises:
- A business actor enterprise content system (222) configured to store the business actor specific knowledge and specific requirements,
- A business actor artificial intelligence framework (223) configured to:
∘ Tune (40) the business domain foundation model, the tuning consisting of using scripts and the prompt flow in order to incorporate the business domain specific knowledge by the business domain foundation model, and
o Generate (50), by prompt engineering with the trained business domain foundation model, the reference business domain architecture of the IT solution, the reference business domain architecture being the abstract architecture of the design of the IT solution specific to the business actor.

14. A computer program comprising instructions which, when the computer program is carried out on a computer, cause the computer to carry out the method of any one of the claims 1 to 9.

15. A computer readable storage medium having recorded thereon the computer program of the precedent claim.
